# EUROPÄISCHE PATENTSCHRIFT

(11) **EP 1 495 381 B1**
(45) Veröffentlichungstag und Bekanntmachung des Hinweises auf die Patenterteilung: **31.10.2012**
(21) Anmeldenummer: 03746290.0
(22) Anmeldetag: 11.04.2003
(51) Int. Cl.: G05B 19/418

(54) **MESSEINRICHTUNG F R DIE PROZESSTECHNIK UND BETRIEBSVERFAHREN F R EINE MESSEINRICHTUNG**
MEASURING DEVICE FOR PROCESS ENGINEERING AND OPERATING METHOD FOR A MEASURING DEVICE
DISPOSITIF DE MESURE POUR PROCESSUS INDUSTRIELS ET MODE DE FONCTIONNEMENT D'UN DISPOSITIF DE MESURE

(30) Priorität: 13.04.2002 DE 10216331
(43) Veröffentlichungstag der Anmeldung: 12.01.2005
(73) Patentinhaber: Endress + Hauser Conducta GmbH + Co. KG, 70839 Gerlingen (DE)
(72) Erfinder: GUNZERT, Michael, 76863 Herxheim (DE); WITTMER, Detlev, 75433 Maulbronn (DE)
(74) Vertreter: Andres, Angelika Maria
(86) Internationale Anmeldenummer: PCT/EP2003/003760
(87) Internationale Veröffentlichungsnummer: WO 2003/087965

(56) Entgegenhaltungen:
- WO-A1-00/16269

## Beschreibung

Die vorliegende Erfindung betrifft eine Messeinrichtung für die Prozesstechnik zum Einsatz in Mess- und/oder Reinigungs- und/oder Kalibrierungsanlagen im Bereich der Prozessautomatisierung, zur Messung von pH-Werten und/oder Redoxpotentialen und/oder anderen Prozessgrößen, mit mindestens einer Zentraleinheit, die mindestens einen Zentralrechner aufweist.

Ferner betrifft die vorliegende Erfindung ein Betriebsverfahren für eine Messeinrichtung für die Prozesstechnik zum Einsatz in Mess- und/oder Reinigungs- und/oder Kalibrierungsanlagen im Bereich der Prozessautomatisierung, zur Messung von pH-Werten und/oder Redoxpotentialen und/oder anderen Prozessgrößen, mit mindestens einer Zentraleinheit, die mindestens einen Zentralrechner aufweist.

Als Stand der Technik wird auf die WO 00/16269 verwiesen.

Herkömmliche Messeinrichtungen besitzen häufig eine Mikroprozessorsteuerung, welche Prozessabläufe überwacht und Messwerte aufbereitet. Allerdings ist diese Art der Steuerung sehr unflexibel, da in der Regel ein erheblicher Aufwand erforderlich ist, um z.B. die Software der Mikroprozessorsteuerung auszutauschen oder die Funktionalität der Einrichtung auf anderem Wege zu erweitern.

Üblicherweise muss ein Programmspeicher der Mikroprozessorsteuerung ausgewechselt werden oder der Programmspeicher muss - ggf. im Feld - zumindest neu beschrieben werden. Außerdem erfordert eine Anpassung der Software nahezu unabhängig vom Änderungsumfang teures Spezialistenwissen und benötigt darüber hinaus viel Zeit.

Demgemäss ist es Aufgabe der vorliegenden Erfindung, eine Messeinrichtung der eingangs genannten Art und ein entsprechendes Betriebsverfahren hierfür derart weiterzuentwickeln, dass eine einfachere und wirtschaftlichere Anpassung der Messeinrichtung an sich ändernde Anforderungen möglich ist.

Diese Aufgabe wird durch eine Messeinrichrung und ein Betriebsverfahren gemäß Anspruch 1 und 14 gelöst.

Das Verwaltungssystem arbeitet mit einem Betriebssystem des Zentralrechners zusammen und benutzt vom Betriebssystem bereitgestellte Dienste. Dadurch ist es prinzipiell möglich, das Verwaltungssystem unabhängig von der Architektur des Zentralrechners auszulegen, sofern das Betriebssystem den Zugriff auf sämtliche vom Verwaltungssystem benötigte Hardwarekomponenten des Zentralrechners bereitstellt.

Es ist auch möglich, dass das Verwaltungssystem in das Betriebssystem des Zentralrechners integriert ist. Alternativ hierzu ist es ebenfalls möglich, dass das Verwaltungssystem Dienste des Betriebssystems nutzt und parallel dazu auch selbst auf Hardwarekomponenten des Zentralrechners zugreift.

Ganz allgemein kann das Verwaltungssystem in einem Programmspeicher des Zentralrechners abgelegt sein. Der Programmspeicher kann dabei als Festwertspeicher, d.h. ROM, oder auch als wieder beschreibbarer Flash/EEPROM-Speicher ausgebildet sein.

Üblicherweise ist das Verwaltungssystem, wie das Betriebssystem auch, in einem besonders hierfür reservierten Bereich des Programmspeichers des Zentralrechners abgelegt und wird nur im Falle einer Softwareaktualisierung oder dergleichen neu in den Programmspeicher geschrieben.

Das Verwaltungssystem ordnet Daten, die von dem Zentralrechner verarbeitet oder auch nur weitergeleitet werden sollen, den dafür vorgesehenen Systemkomponenten in einer noch zu erläuternden Weise zu. Solche Daten können beispielsweise Messdaten von Sensoren sein.

Hierbei stellt das Verwaltungssystem unter Verwendung der Systemkomponenten in besonders vorteilhafter Weise eine Abstraktionsebene zwischen physikalischen Signalen wie z.B. Sensorsignalen und dem Zentralrechner selbst dar.

Dadurch entfällt die Notwendigkeit, auf dem Zentralrechner ablaufende Anwendungsprogramme an spezielle Hardwarekomponenten anzupassen. Beispielsweise muss ein Anwendungsprogramm bei der vorliegenden Erfindung keinen speziellen Programmcode zur Ansteuerung eines an den Zentralrechner angeschlossenen Sensors aufweisen, um entsprechende Messwerte von dem Sensor erhalten zu können.

Die Ansteuerung des Sensors und das Auslesen von Messwerten erfolgt bei der erfindungsgemäßen Messeinrichtung mit dem Verwaltungssystem für die Systemkomponenten dadurch, dass dem Sensor eine besondere Systemkomponente, nämlich eine Eingabekomponente, zugewiesen wird, die einerseits spezielle Informationen zur Ansteuerung des Sensors enthält, und die andererseits eine Systemschnittstelle innerhalb des Verwaltungssystems aufweist, über die die Messwerte des Sensors an weitere Systemkomponenten, wie z.B. Ausgabekomponenten, weitergeleitet werden können. Dadurch muss nicht das Anwendungsprogramm angepasst werden, wenn z.B. ein anderer Sensor verwendet wird. Lediglich die entsprechende Eingabekomponente ist anzupassen.

Die Systemschnittstelle einer Systemkomponente kann beispielsweise aus einem Speicherbereich in dem Zentralrechner bestehen, auf den sowohl das Verwaltungssystem als auch eine bzw. mehrere andere Systemkomponenten zugreifen können. Der Speicherbereich kann beispielsweise als Stack-Speicher organisiert sein.

In den folgenden Erläuterungen wird der Begriff Verbindung verwendet, um ganz allgemein einen Datenaustausch zwischen Systemkomponenten wie z.B. Ein- und Ausgabekomponenten untereinander mittels dem Verwaltungssystem und zwischen Systemkomponenten und anderen Komponenten des Zentralrechners zu bezeichnen. Eine Verbindung kann mithilfe der Systemschnittstelle realisiert werden; es sind aber auch andere Techniken für einen Datenaustausch im Sinne einer Verbindung denkbar.

Über entsprechende Schnittstellenkomponenten ermöglicht das Verwaltungssystem, Daten über Schnittstellen an Benutzer der Messeinrichtung oder auch an andere Einrichtungen, z.B. weitere Messeinrichtungen, zu übertragen. Auch die Schnittstellenkomponenten weisen dazu eine Systemschnittstelle zum Austausch von Daten in dem bzw. durch das Verwaltungssystem auf.

Ferner weisen die Schnittstellenkomponenten schnittstellenspezifische Informationen auf, um direkt die Schnittstellen-Hardware des Zentralrechners anzusteuern, oder um ggf. vom Betriebssystem bereitgestellte Dienste zur Nutzung der Schnittstellen aufzurufen.

Eingabekomponenten können beispielsweise zum Einlesen von Daten an Digital- oder Analogeingängen des Zentralrechners verwendet werden. Ausgabekomponenten können dementsprechend beispielsweise zur Ansteuerung von Digital- oder Analogausgängen des Zentralrechners bzw. daran angeschlossener Aktoren verwendet werden.

Das Verwaltungssystem ermöglicht auf einfache Weise, verschiedenartigste Baugruppen und Hardware-Komponenten in die erfindungsgemäße Messeinrichtung zu integrieren, wobei die Anpassung auf programmtechnischer Ebene in Form der Systemkomponenten stattfindet.

Das Verwaltungssystem kann Systemkomponenten dynamisch verbinden, so dass eine Anpassung der Funktionalität der Messeinrichtung, die im wesentlichen vom Funktionsumfang der im Programmspeicher befindlichen Betriebsprogramme des Zentralrechners abhängt, einfach möglich ist.

Wird beispielsweise ein neuer Sensor an der Messeinrichtung angeschlossen, so ist lediglich die bereits im Gerät vorhandene Eingabekomponente aus dem vorhandenen Satz von Eingabekomponenten zu instanziieren und mittels Verwaltungssystem je nach Bedarf mit anderen Systemkomponenten zu verbinden.

Dynamisch bedeutet in diesem Zusammenhang, dass Systemkomponenten während des Betriebs des Zentralrechners oder zumindest dann verbunden oder auch voneinander getrennt werden können, wenn bereits ein Anwendungsprogramm im Zentralrechner befindlich ist. Es ist somit möglich, die Messeinrichtung neu zu konfigurieren, ohne den gesamten Programmspeicher des Zentralrechners neu beschreiben zu müssen.

Eine sehr effiziente Möglichkeit, neue Hardware-Komponenten wie z.B. A/D-Wandler oder dergleichen zu integrieren, besteht darin, beim Starten der Messeinrichtung alle Schnittstellen und Ein- bzw. Ausgänge des Zentralrechners auf das Vorhandensein von Sensoren oder anderen Hardware-Komponenten zu testen, und den dabei gefundenen Hardware-Komponenten die entsprechenden Systemkomponenten, also z.B. Ein- oder Ausgabekomponenten zuzuordnen. Zweckmäßigerweise befindet sich dazu bereits eine Anzahl von Systemkomponenten im Programmspeicher des Zentralrechners, auf die bei Bedarf zugegriffen werden kann.

Es ist auch möglich, unterschiedliche Ausführungsformen der Messeinrichtungen bei der Herstellung mit einer unterschiedlichen Zahl an Systemkomponenten zu versehen. Beispielsweise können Messeinrichtungen mit geringem Funktionsumfang und wenig Programmspeicher mit nur wenigen Systemkomponenten ausgestattet sein; größere Messeinrichtungen mit mehr Programmspeicher können bei der Herstellung bereits sehr viele Systemkomponenten erhalten, die eine sehr flexible Anpassung an sich ändernde Anforderungen ermöglichen.

Zur rechnerischen Verarbeitung von Mess- oder Regelgrößen sind im Verwaltungssystem Funktionskomponenten vorgesehen, die üblicherweise mindestens einen Eingang und einen Ausgang besitzen und dazu dienen, funktionale Zusammenhänge zwischen den am Eingang/an den Eingängen liegenden Daten und den am Ausgang/an den Ausgängen liegenden Daten zu realisieren. Beispielsweise ist es möglich, mathematische Funktionen mit Funktionskomponenten zu realisieren. Funktionskomponenten können darüber hinaus auch (Zustands-)Speicher enthalten und arbeiten dann im wesentlichen als Zustandsautomat, wodurch auch komplexe Systeme wie z.B. Filter höherer Ordnung realisierbar sind.

Funktionskomponenten können von dem Verwaltungssystem beispielsweise mit Eingabekomponenten und/oder mit Ausgabekomponenten oder weiteren Systemkomponenten verbunden werden. Wie bereits angesprochen, bedeutet der Ausdruck "Verbindung" in diesem Zusammenhang, dass Systemkomponenten über eine Systemschnittstelle wie z.B. gemeinsame Speicherbereiche in Form eines Stack-Speichers o.ä., Daten austauschen können.

Dadurch ist es möglich, mathematische Funktionen wie beispielsweise eine Mittelwertbildung oder eine Rundung auf durch Eingabekomponenten bereitgestellte Sensordaten anzuwenden und die Ergebnisse z.B. mittels Ausgabekomponenten an Aktoren weiterzuleiten. Ebenso ist mit einer entsprechenden Funktionskomponente auch eine Filterung von Signalen möglich.

Insbesondere ist auch eine Entwicklung benutzerspezifischer Funktionen möglich, die in Form einer benutzerspezifischen Funktionskomponente in die Messeinrichtung integriert wird. Besonders günstig ist hierbei, dass eine Änderung eines bereits auf dem Zentralrechner laufenden Anwendungsprogramms nicht erforderlich ist. Das Verwaltungssystem kann die benutzerspezifische Funktionskomponente in gleicher Weise verbinden wie andere Systemkomponenten auch.

Üblicherweise weisen die Systemkomponenten Parameter auf, beispielsweise zur Identifikation von Komponenten oder auch zur Steuerung der Signal- bzw. Datenverarbeitung in Funktionskomponenten. Die Parameter werden von einem Parameter-Verwaltungssystem organisiert, das in dem Verwaltungssystem des Zentralrechners vorgesehen ist.

Das Parameter-Verwaltungssystem löst Abhängigkeiten zwischen Parametern in unterschiedlichen Komponenten auf. Dazu ist es erforderlich, dass Systemkomponenten, die Parameter verwenden, diese Parameter in dem Parameter-Verwaltungssystem registrieren.

Eine weitere vorteilhafte Ausführungsform der erfindungsgemäßen Messeinrichtung ist dadurch gekennzeichnet, dass das Verwaltungssystem Mittel zur Fehlererkennung und/oder Fehlerbehandlung aufweist, die beispielsweise die Nutzung der den Systemkomponenten bzw. deren Instanzen zugewiesenen Speicherbereiche überwachen.

Sehr vorteilhaft ist auch eine vorzugsweise in dem Zentralrechner vorgesehene Kommunikationsschnittstelle, die mit einer Schnittstellenkomponente des Verwaltungssystems zusammenwirkt. Die Kommunikationsschnittstelle ist beispielsweise als Feldbusschnittstelle ausgebildet.

Es ist auch möglich, eine Kommunikationsschnittstelle durch Parametrisierung bzw. Definition von speziellen Funktionskomponenten, die mit einer Schnittstellenkomponente zusammenwirken, unterschiedlich auszubilden und somit verschiedenen Standards anzupassen. Beispielsweise können mit dieser Technik auch Digitalausgänge des Zentralrechners mit der Funktionalität einer Kommunikationsschnittstelle versehen werden.

Sehr zweckmäßig zum Datenaustausch zwischen dem Verwaltungssystem bzw. dessen Schnittstellenkomponenten und einer Kommunikationsschnittstelle ist hierbei die Verwendung von sogenannten Dual-Port-RAM-Speichern, also Speichern, die über zwei separate Schreib-/Leseschnittstellen verfügen. Eine Synchronisation zwischen dem Verwaltungssystem und der Kommunikationsschnittstelle ist dabei durch die Verwendung von Semaphoren erreichbar.

Eine weitere sehr vorteilhafte Ausführungsform der vorliegenden Erfindung ist dadurch gekennzeichnet, dass eine Benutzerschnittstelle vorgesehen ist, über die Daten mittels Anzeigeelementen angezeigt werden können bzw. über die ein Benutzer die Messeinrichtung unter Verwendung eines Eingabegeräts bedienen oder auch konfigurieren kann. Als Anzeigeelement kann beispielsweise eine Flüssigkristallanzeige vorgesehen sein. In der Prozesstechnik sind auch berührungsempfindliche Anzeigeelemente wie z.B. sog. "touch-panels" sehr zweckmäßig.

Eine weitere flexible, erfindungsgemäße Lösung zeichnet sich dadurch aus, dass die Kommunikationsschnittstelle einen integrierten Web-Server aufweist. Der integrierte Web-Server kann Daten der Messeinrichtung in dem weit verbreiteten HTML (hypertext markup language)-Format bereitstellen. Ein an die Messeinrichtung angeschlossener PC bzw. ein Notebook kann mit einem Web-Browser die von der Messeinrichtung bereitgestellten Daten anzeigen oder speichern.

Sehr vorteilhaft ist auch eine andere Ausführungsform der vorliegenden Erfindung, die dadurch gekennzeichnet ist, dass die Benutzerschnittstelle einen Web-Browser aufweist.

Die Benutzerschnittstelle kann damit von der Kommunikationsschnittstelle im HTML-Format bereitgestellte Daten anzeigen. Es ist nicht erforderlich, die über die Benutzerschnittstelle auf einem Anzeigeelement der Messeinrichtung auszugebenden Daten andersartig zu formatieren als diejenigen Daten, die über eine Kommunikationsschnittstelle zur Auswertung an weitere Geräte, wie z.B. ein Notebook übertragen werden. Insbesondere ist es nicht erforderlich, die auszugebenden Daten in der Messeinrichtung auf mehrere Arten aufzubereiten um sie z.B. der Größe der Anzeigeelemente anzupassen, da das HTML-Format bereits geeignete Formatierungsoptionen bereitstellt.

Darüber hinaus ist es denkbar, dass die Kommunikationsschnittstelle eine Funkschnittstelle z.B. zu einem Mobilfunknetzsystem aufweist. Überdies ist es auch möglich, die Anzeige von Prozesszuständen über in den Mobilfunknetzen weit verbreitete Kurznachrichtensysteme (SMS) weiterzuleiten. Eine weitere Möglichkeit zur drahtlosen Anbindung der Messeinrichtung besteht in der Verwendung von Funkübertragungseinrichtungen, die nach dem de-facto-Standard Bluetooth arbeiten.

Eine weitere besonders vorteilhafte Ausführungsform des erfindungsgemäßen Verfahrens ist dadurch gekennzeichnet, dass von dem Verwaltungssystem die Ausführung von Anwendungsprogrammen auf dem Zentralrechner mithilfe der Verwaltungskomponenten verwaltet werden kann. Damit ist es möglich, im Programmspeicher des Zentralrechners enthaltene Anwendungsprogramme auch von Funktions- oder anderen Systemkomponenten aus aufzurufen. Hierdurch sind insbesondere sog. callback-Mechanismen realisierbar, die eine Interaktion von Anwendungsprogrammen mit Systemkomponenten ermöglichen, ohne dass ein Anwendungsprogramm selbst auf eine Systemkomponente zugreifen muss. Solche callback-Mechanismen sind besonders gut geeignet, um Anwendungsprogramme in Reaktion auf die Änderung eines Sensorsignals oder dergleichen aufzurufen.

Als eine weitere Lösung der Aufgabe der vorliegenden Erfindung ist ein Betriebsverfahren für eine Messeinrichtung für die Prozesstechnik zum Einsatz in Mess- und/oder Reinigungs- und/oder Kalibrierungsanlagen im Bereich der Prozessautomatisierung, zur Messung von pH-Werten und/oder Redoxpotentialen und/oder anderen Prozessgrößen, mit mindestens einer Zentraleinheit, die mindestens einen Zentralrechner aufweist, vorgeschlagen, wobei in dem Zentralrechner ein Verwaltungssystem Eingabekomponenten und/oder Ausgabekomponenten und/oder Funktionskomponenten und/oder Dienstkomponenten und/oder Verwaltungskomponenten und/oder Schnittstellenkomponenten und/oder andere Systemkomponenten dynamisch verwaltet.

Besonders vorteilhaft ist ein Betriebsverfahren, bei dem Systemkomponenten, vorzugsweise mit Hilfe einer Entwicklungsumgebung, spezifiziert und/oder ausgewählt und/oder konfiguriert und/oder miteinander verbunden werden, bevor sie in den Zentralrechner übertragen werden.

Das erfindungsgemäße Verfahren ermöglicht eine Entwicklung von Systemkomponenten auf einem speziell dafür vorgesehenen Entwicklungssystem mit einer dafür eingerichteten Entwicklungsumgebung.

Diese Entwicklungsumgebung kann bspw. Mittel zur grafischen Programmierung der Systemkomponenten bzw. der Verbindungen zwischen den Systemkomponenten bereitstellen. Es ist dabei auch möglich, auf Bibliotheken zurückzugreifen, die häufig eingesetzte Systemkomponenten bzw. Informationen über Verbindungen enthalten.

Auf diese Weise kann der für die Systemkomponenten erforderliche Programmcode effizient wiederverwendet werden, wodurch der gesamte Entwicklungsprozess einer erfindungsgemäßen Messeinrichtung wirtschaftlicher wird. Anschließend können die Systemkomponenten und die Informationen über die Verbindungen in den Zentralrechner übertragen werden, wo sie von dem Verwaltungssystem ausgewertet werden.

Besonders vorteilhaft an dieser Lösung ist die Möglichkeit, Verbindungen und/oder Verknüpfungen bei Betrieb der erfindungsgemäßen Einrichtung vornehmen zu können. Die Konfiguration der Messeinrichtung kann vorgenommen werden, ohne die Messeinrichtung vollständig abzuschalten oder sie in einen speziellen Betriebszustand zu versetzen.

Eine weitere vorteilhafte Variante des erfindungsgemäßen Betriebsverfahrens sieht vor, dass Systemkomponenten bei Betrieb der Messeinrichtung in den Zentralrechner übertragen werden und/oder von dem Verwaltungssystem eingebunden bzw. mit anderen Systemkomponenten verbunden werden. Dies kann beispielsweise dadurch geschehen, dass der entsprechende Programmcode der Komponenten in einen freien, für diese Zwecke vorgesehenen Bereich des Programmspeichers des Zentralrechners übertragen wird. Damit ist eine weitere Möglichkeit gegeben, die Funktionalität der Messeinrichtung während ihres Betriebs zu erweitern.

Eine weitere erfindungsgemäße Ausbildung des Betriebsverfahrens sieht vor, dass Systemkomponenten fest in den Zentralrechner eingebunden werden, und dass zur Konfiguration der Messeinrichtung Informationen über die Verbindung der Systemkomponenten von dem Verwaltungssystem ausgewertet werden.

Bei dieser Variante sind elementare Systemkomponenten wie z.B. Eingabe- und Ausgabekomponenten, die physikalisch bereits im Zentralrechner vorhandene Ein- und Ausgabemittel wie z.B. digitale Ein- und Ausgänge und analoge Ein- und Ausgänge bzw. Ein-/Ausgabekomponenten für bestimmte Sensor/Aktor-Module repräsentieren, im Programmspeicher des Zentralrechners vorhanden. Zusätzlich sind z.B. mehrere Funktionskomponenten, die beispielsweise elementare mathematische Funktionen darstellen, bereits im Programmspeicher des Zentralrechners vorhanden. Zur Konfiguration der bereits vorhandenen Systemkomponenten werden gewünschte Verbindungen z.B. mit Hilfe einer Entwicklungsumgebung definiert und anschließend in den Zentralrechner übertragen, wo die Informationen über die Verbindungen von dem Verwaltungssystem ausgewertet und die entsprechenden Verbindungen etabliert werden.

Eine weitere sehr vorteilhafte Ausführungsform des erfindungsgemäßen Betriebsverfahrens ist dadurch gekennzeichnet, dass die Informationen über die Verbindung der Systemkomponenten von einer ersten Messeinrichtung auf weitere Messeinrichtungen übertragen werden. Auf die gleiche Weise können auch Systemkomponenten von einer Messeinrichtung auf eine andere Messeinrichtung übertragen werden.

Weitere Merkmale, Anwendungsmöglichkeiten und Vorteile der Erfindung ergeben sich aus der nachfolgenden Beschreibung von Ausführungsbeispielen der Erfindung, die in der Figur der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

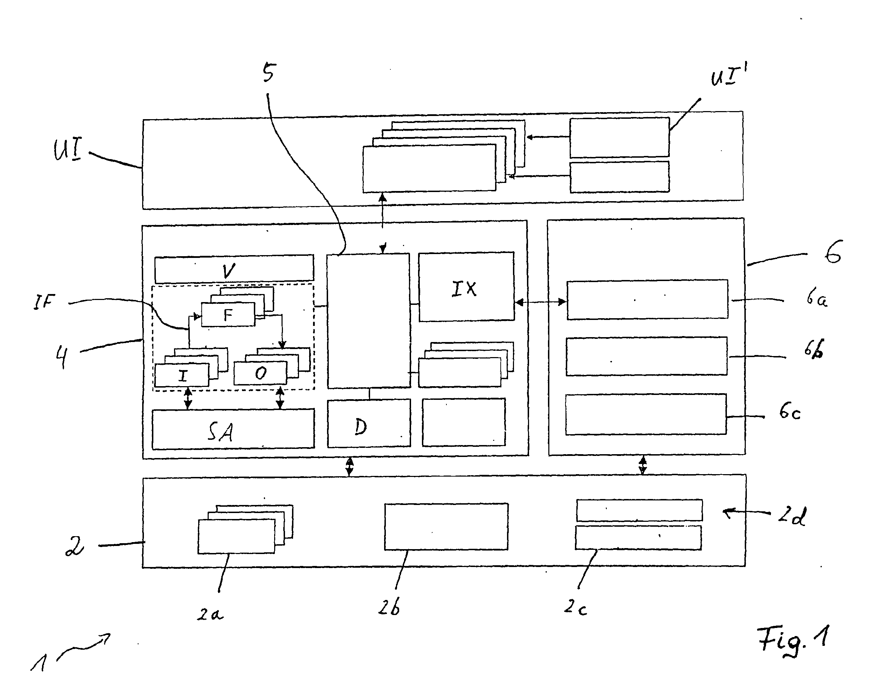

- Figur 1: zeigt eine schematische Darstellung des Zentralrechners einer erfindungsgemäßen Messeinrichtung.

Der Zentralrechner 1 weist ein Betriebssystem 2 auf, das auf dem Zentralrechner 1 ablaufenden Anwendungsprogrammen Dienste bereitstellt und den Zugriff auf Hardwarekomponenten des Zentralrechners 1 ermöglicht. Hierzu weist das Betriebssystem 2 u.a. Gerätetreiber 2a, ein Dateisystem 2b, eine Grafikbibliothek 2c, sowie weitere Komponenten 2d auf.

Die Funktionalität des Dateisystems 2b kann auch in einem Speicherverwaltungssystem des Betriebssystems 2 enthalten sein.

Das Betriebssystem 2 kontrolliert den Ablauf von Prozessen auf dem Zentralrechner 1 und stellt eine Speicherverwaltung bereit. Dienste des Betriebssystems 2 verwalten Zeitgeber, Standardfunktionen zur Ansteuerung von Schnittstellen und sonstige häufig benötigte Funktionen.

Ferner weist der Zentralrechner 1 eine Kommunikationsschnittstelle 6 auf, die neben einem sog. "embedded Web-Server", also einem integrierten Web-Server 6b, auch eine Feldbus-Schnittstelle 6a und eine Funkschnittstelle 6c besitzt, die nach dem de-facto-Standard Bluetooth arbeitet. Die Funkschnittstelle 6c kann auch so ausgebildet sein, dass sie zu einem GSM-Mobilfunknetzsystem kompatibel ist. Die Feldbus-Schnittstelle 6a kann auch als Profibus-, HART- oder FOUNDATION Fieldbus-Schnittstelle ausgebildet sein.

Die Kommunikationsschnittstelle 6 ermöglicht es, Daten mit anderen Messeinrichtungen oder Auswerteinrichtungen auszutauschen. Beispielsweise ist es über die Bluetooth Funkschnittstelle 6c möglich, Prozessdaten und aufgezeichnete Sensordaten der Messeinrichtung drahtlos an ein Notebook zu übertragen, das für eine weitere Auswertung der Prozess- bzw. Sensordaten vorgesehen ist.

Schließlich weist der Zentralrechner 1 auch eine Benutzerschnittstelle UI auf. Die Benutzerschnittstelle UI hat als Ausgabekomponente ein sog. "touch-panel", d.h. eine berührungsempfindliche Flüssigkristallanzeige (nicht gezeigt), die zur Ausgabe von Prozessdaten und Betriebsgrößen der Messeinrichtung vorgesehen ist.

In der Benutzerschnittstelle UI ist ein Web-Browser UI' integriert, der von dem integrierten Web-Server 6b der Kommunikationsschnittstelle 6 gelieferte, im HTML (hypertext markup language)-Format vorliegende Daten anzeigt.

Der Zentralrechner 1 weist ein Verwaltungssystem 4 auf, welches, ähnlich wie das Betriebssystem 2, in einem hierfür eigens reservierten Bereich des Programmspeichers des Zentralrechners 1 abgelegt ist. Der Programmspeicher des Zentralrechners 1 ist als FLASH/EEPROM-Speicher ausgebildet.

Das Verwaltungssystem 4 verwaltet ganz allgemein dynamisch Systemkomponenten der Messeinrichtung, zu denen Eingabekomponenten I, Ausgabekomponenten O, Funktionskomponenten F, Dienstkomponenten D, Verwaltungskomponenten V und Schnittstellenkomponenten IX gehören.

Die Systemkomponenten I, O, IX stellen eine programmtechnische Repräsentation von Hardwarekomponenten dar, die entweder bereits im Zentralrechner 1 enthalten oder an diesen anschließbar sind.

Dabei repräsentieren die Eingabekomponenten I Hardwarekomponenten, die zur Dateneingabe dienen. Solche Hardwarekomponenten sind Sensoren aller Art sowie Digital- und Analogeingänge des Zentralrechners sowie weitere mögliche Datenquellen.

Die Ausgabekomponenten O repräsentieren demgemäß Hardwarekomponenten, die zur Datenausgabe dienen, so z.B. Aktoren und Digital- und Analog-Ausgänge, die auch über eine serielle Schnittstelle verbunden sein können.

Die Schnittstellenkomponenten IX repräsentieren üblicherweise die im Zentralrechner 1 vorhandene Schnittstellen-Hardware.

Die Funktionskomponenten F, die Dienstkomponenten D und die Verwaltungskomponenten V repräsentieren funktionale Einheiten von auf dem Zentralrechner 1 lauffähigem Programmcode. Im Gegensatz zu den Systemkomponenten I, O, IX enthalten sie keinen Programmcode zur Ansteuerung von Hardwarekomponenten wie Sensoren usw. Ausnahmen hiervon sind jedoch denkbar.

Dabei ermöglichen die Funktionskomponenten F die Realisierung z.B. mathematischer Funktionen und die Verknüpfung von Daten ganz allgemein. Auch Zustandsautomaten sind mit den Funktionskomponenten F realisierbar. Zusätzlich können auch benutzerspezifische Funktionen realisiert werden, die aufgrund von Spezifikationen erstellt werden.

Die Dienstkomponenten D nutzen vom Betriebssystem 2 bereitgestellte Dienste, wie z.B. einen Zeitgeberdienst oder dergleichen. Darüber hinaus können die Dienstkomponenten D auch speziellen Programmcode enthalten zur Ansteuerung von Komponenten des Zentralrechners 1, für deren Benutzung vom Betriebssystem 2 keine Dienste bereitgestellt werden.

Die Verwaltungskomponenten V erlauben es, die Ausführung von Anwendungsprogrammen auf dem Zentralrechner 1 zu verwalten bzw. zu steuern. Damit ist es möglich, im Programmspeicher des Zentralrechners enthaltene Anwendungsprogramme auch von Funktionskomponenten F oder anderen Systemkomponenten aus aufzurufen. Dies ist insbesondere dann von großem Vorteil, wenn Anwendungsprogramme in Reaktion auf ein Sensorsignal oder ein Ereignis aufzurufen sind, das innerhalb der Systemkomponenten verarbeitet wird.

Sämtliche Systemkomponenten I, O, F, D, V, IX sind in Form von Code-Modulen realisiert, die aus auf dem Zentralrechner 1 lauffähigem Programmcode bestehen.

Die Code-Module sind üblicherweise in dem Programmspeicher des Zentralrechners 1 abgelegt. Es ist auch möglich, während des Betriebs der Messeinrichtung Code-Module in den Zentralrechner 1 zu übertragen, um auf diese Weise neue Systemkomponenten bereitzustellen. Eine derartige Übertragung kann beispielsweise über die Kommunikationsschnittstelle 6 erfolgen, so dass Code-Module von anderen Messeinrichtungen oder von weiteren Einrichtungen, wie z.B. von PCs einer Leitstelle oder direkt vom Hersteller der Messeinrichtung bzw. von Anbietern benutzerspezifischer Funktionskomponenten auf die erfindungsgemäße Messeinrichtung übertragbar sind.

Das Verwaltungssystem 4 kann einzelne Systemkomponenten miteinander verbinden, wie nachfolgend anhand der Figur 1 näher erläutert wird. Im Verwaltungssystem 4 ist die Eingabekomponente I mit der Funktionskomponente F verbunden. Graphisch wird dies durch den Pfeil IF symbolisiert. Die programmtechnische Realisierung dieser Verbindung erfolgt in mehreren Schritten.

Im ersten Schritt erfolgt eine Instantiierung des für die Eingabekomponente I zu verwendenden Code-Moduls, wodurch eine neue Instanz des Code-Moduls entsteht, die der Eingabekomponente I zugewiesen wird. Diese neue Instanz besitzt die Funktionalität des ausgewählten Code-Moduls.

Zusätzlich wird der neuen Instanz ein Speicherbereich temporär zugeordnet, der zur Datenverarbeitung innerhalb der Eingabekomponente I verwendbar ist. Ein weiterer Speicherbereich in Form eines Stack-Speichers wird der Eingabekomponente I für den Datenaustausch mit anderen Systemkomponenten zugeordnet. Auch dieser weitere Speicherbereich wird vorzugsweise nur temporär für die Lebensdauer der Eingabekomponente I reserviert. Dies hat den Vorteil, dass der temporär reservierte Speicher nach Beendigung der der Eingabekomponente I zugeordneten Instanz anderweitig nutzbar ist, beispielsweise für andere Instanzen.

Wie in Figur 1 angedeutet, ist es möglich, mehrere Instanzen eines Code-Moduls zu erzeugen. Je Instanz ist dann ein Stack-Speicher und ggf. ein Speicherbereich zur komponenteninternen Datenverarbeitung erforderlich. Der Programmcode des Code-Moduls selbst liegt jedoch nur einmal im Programmspeicher des Zentralrechners vor und wird bei Aufruf jeder der drei Instanzen abgearbeitet. Das Verwaltungssystem 4 verwaltet hierbei die Stack-Speicher und die Speicherbereiche zum Datenaustausch der einzelnen Instanzen, so dass jede Instanz des Code-Moduls auf den ihr bzw. der jeweiligen Eingabekomponente I zugewiesenen Speicher zugreifen kann.

Im vorliegenden Fall ist jede der drei Eingabekomponenten I einem Kanal des Sensor-/Aktor-Schnittstellenmoduls SA zugeordnet.

Die Instantiierung anderer Code-Module erfolgt in derselben Weise. Wie in Figur 1 gezeigt, weist der Zentralrechner 1 jeweils drei Instanzen der Funktionskomponente F und der Ausgabekomponente O auf.

Nach der Instantiierung eines Code-Moduls ist der Eingabekomponente I ein Stack-Speicher zum Datenaustausch mit anderen Systemkomponenten zugeordnet. Gemäß Figur 1 ist die Eingabekomponente I mit einem Eingang der Funktionskomponente F verbunden, vgl. den Pfeil IF. Durch diese Verbindung wird in dem Verwaltungssystem 4 festgelegt, dass die Eingabekomponente I sich mit der Funktionskomponente F einen Stack-Speicher teilt, so dass die Funktionskomponente F beispielsweise von der Eingabekomponente I in den gemeinsamen Stack-Speicher geschriebene Daten wieder auslesen und weiterverarbeiten kann.

Analog hierzu ist der Ausgang der Funktionskomponente F mit der Ausgabekomponente O verbunden. Die Funktionskomponente F realisiert im vorliegenden Fall einen Tiefpassfilter, so dass der Ausgabekomponente O die tiefpassgefilterten Daten der Eingabekomponente I zugeführt werden.

Der Ausgabekomponente O ist schließlich ein Code-Modul zugeordnet, dass einen am Zentralrechner 1 angeschlossenen D/A-Wandler ansteuert.

Die weiteren Instanzen der Eingabe-/Ausgabe- und Funktionskomponenten I, O, F sind in analoger Weise miteinander verbunden.

Insgesamt verwaltet das Verwaltungssystem 4 die Kontexte, d.h. die den Instanzen temporär zugewiesenen Speicherbereiche und Stack-Speicher, und die Informationen über die Verbindung der Instanzen untereinander. Die Verwaltung erfolgt dynamisch, so dass auch während des Betriebs des Zentralrechners 1 oder zumindest dann, wenn bereits ein Anwendungsprogramm im Zentralrechner 1 befindlich ist, Systemkomponenten verbunden und/oder getrennt werden können.

Zur Verwaltung der Kontexte weist das Verwaltungssystem 4 Mittel zur Fehlererkennung und/oder Fehlerbehandlung auf, die z.B. die Verfügbarkeit von Speicherbereichen oder die Nutzung der Systemkomponenten überwachen.

Bei der vorliegenden Messeinrichtung können auch Schnittstellenkomponenten IX verwendet werden, wobei das entsprechende Code-Modul schnittstellenspezifischen Programmcode aufweist, um z.B. die Hardware-Schnittstellen des Zentralrechners 1 zu steuern. Die Schnittstellenkomponente IX des Zentralrechners 1 wird hierbei zur Ansteuerung der Feldbus-Schnittstelle 6a eingesetzt.

Für die Datenübertragung zwischen der Schnittstellenkomponente IX des Verwaltungssystems 4 und der Kommunikationsschnittstelle 6 ist ein Dual-Port-RAM-Speicher vorgesehen, der gleichzeitig von der Schnittstellenkomponente IX und der Kommunikationsschnittstelle 6 beschrieben und ausgelesen werden kann. Die Zugriffssteuerung erfolgt mit Semaphoren, also mit Variablen, die den exklusiven Zugriff der Schnittstellenkomponente bzw. der Kommunikationsschnittstelle 6 auf den Dual-Port-RAM-Speicher regeln, um die Datenkonsistenz in dem Speicher sicherzustellen.

Die Dienstkomponente D macht die Dienste des Betriebssystems 2 den mit ihr verbundenen Systemkomponenten bzw. deren Instanzen verfügbar.

Darüber hinaus weist das Verwaltungssystem 4 ein Parameter-Verwaltungssystem 5 auf, bei dem die Systemkomponenten bzw. deren Instanzen ihre Parameter registrieren, und das alle Parameter der Systemkomponenten verwaltet. Insbesondere werden Abhängigkeiten zwischen Parametern in verschiedenen Systemkomponenten bzw. Instanzen durch das Parameter-Verwaltungssystem 5 aufgelöst.

Besonders vorteilhaft an der Messeinrichtung ist die Möglichkeit, Informationen über die Verbindung von Systemkomponenten beim Betrieb der Messeinrichtung bzw. des Zentralrechners 1 ändern zu können und Systemkomponenten beim Betrieb in den Zentralrechner 1 übertragen zu können, was durch die dynamische Verwaltung der Systemkomponenten durch das Verwaltungssystem 4 ermöglicht wird.

Um beispielsweise eine benutzerdefinierte Filterfunktion in die Messeinrichtung zu integrieren, wird zunächst gemäß entsprechenden Vorgaben ein Code-Modul entwickelt, das die benutzerdefinierte Filterfunktion realisiert. Das Code-Modul wird danach als Funktionskomponente F' in den Programmspeicher des Zentralrechners 1 übertragen. Jetzt kann die in den Zentralrechner übertragene, benutzerdefinierte Systemkomponente F' vom Verwaltungssystem 4 mit anderen Systemkomponenten verbunden werden.

Die Systemkomponenten werden i.a. zyklisch ausgeführt, beispielsweise mit einer Zykluszeit, die von einem Zeitgeber des Betriebssystems 2 vorgegeben wird. Zusätzlich ist es möglich, Systemkomponenten azyklisch direkt von dem gerade ablaufenden Programmcode z.B. eines Anwendungsprogramms aus aufzurufen. Umgekehrt ist es auch möglich, wie bereits erwähnt, von einer Systemkomponente aus ein Anwendungsprogramm aufzurufen oder darin vorgesehene callback-Mechanismen zu nutzen.

Besonders vorteilhaft ist auch die Möglichkeit, Systemkomponenten mit einer dafür vorgesehenen Entwicklungsumgebung beispielsweise auf einem PC zu spezifizieren. Gerade bei Funktionskomponenten ist es denkbar, zur Spezifikation der Funktionskomponente selbst bzw. zu deren Beschreibung innerhalb der Entwicklungsumgebung ganz allgemein bereits vorhandene Beschreibungssprachen von weit verbreiteten Symbolmanipulationsprogrammen wie z.B. "Mathematica", "Matlab" öder "Maple" oder auch Daten von Simulationsprogrammen wie z.B. "SimuLink" zu verwenden.

Sehr zweckmäßig ist dabei auch die Möglichkeit, Funktionskomponenten aus bereits in Funktions-Bibliotheken vorhandenen Teilfunktionen zu kombinieren.

Ebenso ist es möglich, auf einem Entwicklungssystem für Systemkomponenten ganze Bibliotheken von Systemkomponenten zu entwickeln, die je nach Bedarf ausgewählt und in eine entsprechende Messeinrichtung übertragen werden können.

Darüber hinaus kann es sehr vorteilhaft sein, das Zusammenspeielen von einzelnen Systemkomponenten auf dem Entwicklungssystem zu simulieren, bevor diese Systemkomponenten in die Messeinrichtung übertragen werden. Auf die Weise können Fehler beim Betrieb der Messeinrichtung im Feld vermieden werden.

Dazu sind die einzelnen Systemkomponenten bereits in dem Entwicklungssystem miteinander verbindbar. Sofern alle für eine gewünschte Funktionalität erforderlichen Systemkomponenten bereits im Zentralrechner 1 der Messeinrichtung vorhanden sind, reicht es aus, nach der Simulation nur noch die Informationen über die Verbindungen der einzelnen Systemkomponenten untereinander in den Zentralrechner 1 zu übertragen. Die Informationen werden in einem dafür vorgesehenen Speicherbereich des Zentralrechners 1 abgelegt und beispielsweise periodisch von dem Verwaltungssystem 4 auf ihre Gültigkeit bzw. Konsistenz überprüft. Es ist auch möglich, diese Informationen automatisch beim Start der Messeinrichtung auszuwerten.

Eine Änderung der Funktionalität der Messeinrichtung kann stets im Feld vorgenommen werden, indem neue Systemkomponenten oder Informationen über Verbindungen in den Zentralrechner 1 übertragen werden. Insbesondere sind hierzu keine Kenntnisse über die Programmstruktur des Zentralrechners 1 erforderlich, so dass auch Hilfskräfte die erfindungsgemäße Messeinrichtung neu konfigurieren können.

Es ist auch denkbar, dass Informationen über die Verbindung von Systemkomponenten oder auch Systemkomponenten selbst direkt von einer ersten Messeinrichtung zu einer zweiten Messeinrichtung übertragen werden.

## Patentansprüche

1. Messeinrichtung für die Prozesstechnik zum Einsatz in Mess- und/oder Reinigungs- und/oder Kalibrierungsanlagen im Bereich der Prozessautomatisierung, zur Messung von Prozessgrößen, mit mindestens einer Zentraleinheit, die mindestens einen Zentralrechner (1) aufweist, **dadurch gekennzeichnet, dass** in dem Zentralrechner (1) ein Verwaltungssystem (4) zur derartigen Verwaltung von Systemkomponenten, welche in Form von Code-Modulen realisiert sind, die aus auf dem Zentralrechner (1) lauffähigem Programmcode bestehen, vorgesehen ist, dass Systemkomponenten zumindest dann verbunden oder auch voneinander getrennt werden können, wenn bereits ein Anwendungsprogramm im Zentralrechner befindlich ist, so dass eine Anpassung der Funktionalität der Messeinrichtung möglich ist,
wobei Systemkomponenten fest in den Zentralrechner (1) eingebunden sind, wobei verbundene Systemkomponenten über eine Systemschnittstelle Daten austauschen können,
wobei das Verwaltungssystem (4) dazu ausgestaltet ist, zur Konfiguration der Messeinrichtung mit Hilfe einer Entwicklungsumgebung definierte und anschließend in den Zentralrechner (1) übertragene gewünschte Verbindungen auszuwerten und die entsprechenden Verbindungen zu etablieren.

2. Messeinrichtung nach Anspruch 1, wobei die Systemschnittstelle einer Systemkomponente aus einem Speicherbereich in dem Zentralrechner (1) besteht, auf den sowohl das Verwaltungssystem (4) als auch eine bzw. mehrere andere Systemkomponenten zugreifen können.

3. Messeinrichtung nach Anspruch 1 oder 2, wobei die Systemkomponenten Eingabekomponenten (I), Ausgabekomponenten (O), Funktionskomponenten (F), Dienstkomponenten (D), Verwaltungskomponenten (V) oder Schnittstellenkomponenten (IX) sind.

4. Messeinrichtung nach Anspruch 3, wobei die Eingabekomponenten (I), die Ausgabekomponenten (O) und die Schnittstellenkomponenten (IX) eine programmtechnische Repräsentation von Hardwarekomponenter darstellen, die entweder bereits im Zentralrechner enthalten sind oder an diesen anschließbar sind.

5. Messeinrichtung nach Anspruch 3, wobei die Funktionskomponenten (F), die Dienstkomponenten (D) und die Verwaltungskomponenten (V) funktionale Einheiten von auf dem Zentralrechner lauffähigem Programmcode darstellen.

6. Mess- und/oder Steuerungs- und/oder Regelungseinrichtung nach Anspruch 1, **dadurch gekennzeichnet, dass** von dem Verwaltungssystem (4) die Ausführung von Anwendungsprogrammen auf dem Zentralrechner (1) verwaltet werden kann.

7. Messeinrichtung nach einem der vorstehenden Ansprüche, **dadurch gekennzeichnet, dass** das Verwaltungssystem (4) ein Parameter-Verwaltungssystem (5) aufweist.

8. Messeinrichtung nach einem der vorstehenden Ansprüche, **dadurch gekennzeichnet, dass** das Verwaltungssystem (4) Mittel zur Fehlererkennung und/oder Fehlerbehandlung aufweist.

9. Messeinrichtung nach einem der vorstehenden Ansprüche, **dadurch gekennzeichnet, dass** vorzugsweise in dem Zentralrechner (4) eine Kommunikationsschnittstelle (6) vorgesehen ist, die mit der Schnittstellenkomponente (IX) zusammenwirkt.

10. Messeinrichtung nach einem der vorstehenden Ansprüche, **dadurch gekennzeichnet, dass** eine Benutzerschnittstelle (UI) vorgesehen ist.

11. Messeinrichtung nach Anspruch 9 oder 10, **dadurch gekennzeichnet, dass** die Kommunikationsschnittstelle (6) eine Feldbus-, Profibus-, HART- oder FOUNDATION Fieldbus-Schnittstelle aufweist.

12. Messeinrichtung nach einem der Ansprüche 9 bis 11, **dadurch gekennzeichnet, dass** die Kommunikationsschnittstelle (6) einen integrierten Web-Server aufweist.

13. Messeinrichtung nach Anspruch 12, **dadurch gekennzeichnet, dass** die Benutzerschnittstelle (UI) einen Web-Browser aufweist.

14. Betriebsverfahren für eine Messeinrichtung für die Prozesstechnik zum Einsatz in Mess- und/oder Reinigungs- und/oder Kalibrierungsanlagen im Bereich der Prozessautomatisierung, zur Messung von Prozessgrößen, mit mindestens einer Zentraleinheit, die mindestens einen Zentralrechner (1) aufweist, wobei in dem Zentralrechner (1) ein Verwaltungssystem (4) Systemkomponenten, derart verwaltet, dass einzelne Systemkomponenten zumindest dann verbunden oder auch voneinander getrennt werden können, wenn bereits ein Anwendungsprogramm im Zentralrechner befindlich ist, so dass eine Anpassung der Funktionalität der Messeinrichtung erfolgt,
wobei verbundene Systemkomponenten über eine Systemschnittstelle Daten austauschen können,
wobei Systemkomponenten fest in den Zentralrechner (1) eingebunden werden,
wobei gewünschte Verbindungen mit Hilfe einer Entwicklungsumgebung definiert und anschließend in den Zentralrechner übertragen werden,
und wobei zur Konfiguration der Messeinrichtung Informationen über die Verbindung der Systemkomponenten von dem Verwaltungssystem (4) ausgewertet und die entsprechenden Verbindungen etabliert werden.

15. Betriebsverfahren nach Anspruch 14, wobei die Systemkomponenten Eingabekomponenten (I), Ausgabekomponenten (O), Funktionskomponenten (F), Dienstkomponenten (D), Verwaltungskomponenten (V) oder Schnittstellenkomponenten (IX) sind.

16. Betriebsverfahren nach Anspruch 14 oder 15, **dadurch gekennzeichnet, dass** Systemkomponenten, vorzugsweise mit Hilfe einer Entwicklungsumgebung, spezifiziert und/oder ausgewählt und/oder konfiguriert und/oder miteinander verbunden werden, bevor sie in den Zentralrechner (1) übertragen werden.

17. Betriebsverfahren nach einem der Ansprüche 14 bis 16, **dadurch gekennzeichnet, dass** Systemkomponenten bei Betrieb der Messeinrichtung in den Zentralrechner (1) übertragen werden und/oder von dem Verwaltungssystem (4) eingebunden werden.

18. Betriebsverfahren nach Anspruch 14, wobei die Eingabekomponenten (I) Hardwarekomponenten repräsentieren, die zur Dateneingabe dienen, die Ausgabekomponenten (O) Hardwarekomponenten repräsentieren, die zur Datenausgabe dienen, die Schnittstellenkomponenten (IX) die im Zentralrechner (1) vorhandene Schnittstellenhardware repräsentieren, und die Funktionskomponenten (F), die Dienstkomponenten (D) und die Verwaltungskomponenten (V) funktionale Einheiten von auf dem Zentralrechner (1) lauffähigem Programmcode repräsentieren.

19. Betriebsverfahren nach einem der Ansprüche 14 bis 18, wobei die Systemschnittstelle einer Systemkomponente aus einem Speicherbereich in dem Zentralrechner (1) besteht, auf den sowohl das Verwaltungssystem als auch eine bzw. mehrere andere Systemkomponenten zugreifen können.

20. Betriebsverfahren nach Anspruch 14, **dadurch gekennzeichnet, dass** die Informationen über die Verknüpfung/Verbindung der Systemkomponenten von einer ersten Messeinrichtung auf weitere Messeinrichtungen übertragen werden.

## Claims

1. Measuring unit designed for process engineering for use in measuring and/or cleaning and/or calibration systems in the field of process automation to measure process variables, with at least one central unit which has at least one central computer (1), **characterized in that** an administration system (4) is provided in the central computer (1), said administration system being designed to manage system components, which are implemented in the form of code modules that comprise program code which is executable on the central computer (1); **in that** system components can then be connected to or separated from one another if an application program is already on the central computer, making it possible to adjust the functionality of the measuring unit,
wherein system components are permanently integrated into the central computer (1), wherein connected system components can exchange data via a system interface,
wherein the administration system (4) is designed - for the purpose of configuring the measuring unit - to analyze preferred connections which are defined with the aid of a development environment and then transmitted to the central computer (1), and to establish the corresponding connections.

2. Measuring unit as claimed in Claim 1, wherein the system interface of a system component consists of a storage area in the central computer (1) which both the administration system (4) and one or more other system components can access.

3. Measuring unit as claimed in Claim 1 or 2, wherein the system components are input components (I), output components (O), function components (F), service components (D), administration components (V) or interface components (IX).

4. Measuring unit as claimed in Claim 3, wherein the input components (I), output components (O) and the interface components (IX) constitute a representation at the program level of hardware components that are either already in the central computer or can be connected to said central computer.

5. Measuring unit as claimed in Claim 3, wherein the function components (F), the service components (D) and the administration components (V) constitute functional units of program code that can be executed on the central computer.

6. Measuring unit and/or command unit and/or control unit as claimed in Claim 1, **characterized in that** the administration system (4) can manage the execution of application programs on the central computer (1).

7. Measuring unit as claimed in one of the previous claims, **characterized in that** the administration system (4) is a parameter administration system (5).

8. Measuring unit as claimed in one of the previous claims, **characterized in that** the administration system (4) has resources to detect errors and or troubleshoot errors.

9. Measuring unit as claimed in one of the previous claims, **characterized in that** a communication interface (6), which interacts with the interface component (IX), is preferably provided in the central computer (1).

10. Measuring unit as claimed in one of the previous claims, **characterized in that** a user interface (UI) is provided.

11. Measuring unit as claimed in Claim 9 or 10, **characterized in that** the communication interface (6) has a fieldbus, Profibus, HART or FOUNDATION Fieldbus interface.

12. Measuring unit as claimed in one of the Claims 9 to 11, **characterized in that** the communication interface (6) has an integrated web server.

13. Measuring unit as claimed in Claim 12, **characterized in that** the user interface (UI) has a web browser.

14. Operating procedure for a measuring unit for process engineering designed for use in measuring and/or cleaning and/or calibration systems in the field of process automation to measure process variables, with at least one central unit that has at least one central computer (1), wherein an administration system (4) in the central computer (1) manages system components in such a way that individual system components can then at least be connected to or separated from one another if an application program is already on the central computer, such that the functionality of the measuring unit is adjusted,
wherein connected system components can exchange data via a system interface,
wherein system components are permanently integrated into the central computer (1),
wherein preferred connections are defined with the aid of a development environment and then transmitted to the central computer,
and wherein - for the configuration of the measuring unit - the administration system (4) evaluates information about the connection of the system components and the corresponding connections are established.

15. Operating procedure as claimed in Claim 14, wherein the system components are input components (I), output components (O), function components (F), service components (D), administration components (V) or interface components (IX)

16. Operating procedure as claimed in Claim 14 or 15, **characterized in that** system components are specified and/or selected and/or configured and/or connected to one another - preferably with the aid of a development environment - before they are transmitted to the central computer (1).

17. Operating procedure as claimed in one of the Claims 14 to 16, **characterized in that** system components are transmitted to the central computer (1) and/or integrated by the administration system (4) when the measuring unit is in operation.

18. Operating procedure as claimed in Claim 14, wherein the input components (I) represent hardware components that are used for data input; the output components (O) represent hardware components that are used for data output; the interface components represent the interface hardware present in the central computer; and the function components (F), the service components (D) and the administration components (V) represent functional units of the program code that can be executed on the central computer (1).

19. Operating procedure as claimed in one of the Claims 14 to 18, wherein the system interface of a system component consists of a memory area in the central computer (1) which both the administration system and one or several other system components can access.

20. Operating procedure as claimed in Claim 14, **characterized in that** the information about the link/connection of the system components is transmitted from an initial measuring unit to other measuring units.

## Revendications

1. Dispositif de mesure destiné à la technique de process, pour une utilisation dans des installations de mesure et/ou de nettoyage et/ou d'étalonnage dans le domaine de l'automatisation des process, destiné à la mesure de grandeurs process, avec au moins une unité centrale, qui comporte au moins un ordinateur central (1), **caractérisé en ce qu'**est prévu dans l'ordinateur central (1) un système de gestion (4) destiné à la gestion de composants système, qui sont réalisés sous la forme de modules de code, lesquels se composent d'un code de programme exécutable, de telle sorte que les composants système puissent être reliés ou séparés les uns des autres lorsqu'un programme d'application se trouve dans l'ordinateur central, de telle sorte à rendre possible une adaptation de la fonctionnalité du dispositif de mesure,
les composants système étant intégrés à demeure dans l'ordinateur central (1), les composants système pouvant échanger des données par l'intermédiaire d'une interface système,
le système de gestion (4) étant conçu pour analyser les liaisons souhaitées définies à l'aide d'un environnement de développement en vue de la configuration du dispositif de mesure, qui sont ensuite transférées dans l'ordinateur central (1), et pour établir les liaisons correspondantes.

2. Dispositif de mesure selon la revendication 1, pour lequel l'interface système d'un composant système se compose d'une zone mémoire dans l'ordinateur central (1), à laquelle aussi bien le système de gestion (4) qu'un ou plusieurs autres composants système peuvent accéder.

3. Dispositif de mesure selon la revendication 1 ou 2, pour lequel les composants système sont des composants d'entrée (I), des composants de sortie (O), des composants de fonction (F), des composants de service (D), des composants de gestion (V) ou des composants d'interface (IX).

4. Dispositif de mesure selon la revendication 3, pour lequel les composants d'entrée (I), les composants de sortie (O) et les composants d'interface (IX) constituent une représentation au niveau programme de composants matériels, qui sont soit déjà contenus dans l'ordinateur central, soit peuvent être reliés à ce dernier.

5. Dispositif de mesure selon la revendication 3, pour lequel les composants de fonction (F), les composants de service (D) et les composants de gestion (V) représentent des unités fonctionnelles du code de programme exécutable sur l'ordinateur central.

6. Dispositif de mesure et/ou de commande et/ou de régulation selon la revendication 1, **caractérisé en ce que** le système de gestion (4) est en mesure de gérer la version des programmes d'application sur l'ordinateur central (1).

7. Dispositif de mesure selon l'une des revendications précédentes, **caractérisé en ce que** le système de gestion (4) comporte un système de gestion de paramètres (5).

8. Dispositif de mesure selon l'une des revendications précédentes, **caractérisé en ce que** le système de gestion (4) comporte des moyens en vue de la détection et/ou du traitement d'erreurs.

9. Dispositif de mesure selon l'une des revendications précédentes, **caractérisé en ce qu'**est prévue, de préférence dans l'ordinateur central, une interface de communication (6), qui interagit avec le composant d'interface (IX).

10. Dispositif de mesure selon l'une des revendications précédentes, **caractérisé en ce qu'**est prévue une interface utilisateur (UI).

11. Dispositif de mesure selon la revendication 9 ou 10, **caractérisé en ce que** l'interface de communication (6) comporte une interface de bus de terrain, Profibus, HART ou FOUNDATION Fieldbus.

12. Dispositif de mesure selon l'une des revendications 9 à 11, **caractérisé en ce que** l'interface de communication (6) comporte un serveur Web intégré.

13. Dispositif de mesure selon la revendication 12, **caractérisé en ce que** l'interface utilisateur (UI) présente un serveur Web.

14. Procédé d'exploitation relatif à un dispositif de mesure pour la technique de process, destiné à une utilisation au sein d'installations de mesure et/ou de nettoyage et/ou d'étalonnage dans le domaine de l'automatisation des process, destiné à la mesure de grandeurs process, avec au moins une unité centrale, qui comporte au minimum un ordinateur central (1), un système de gestion (4) intégré dans l'ordinateur central (1) gérant des composants système de telle manière que des composants système individuels puissent au minimum être reliés les uns aux autres ou séparés les uns des autres lorsqu'un programme d'application se trouve déjà dans l'ordinateur central, si bien qu'une adaptation de la fonctionnalité du dispositif de mesure a lieu,
pour lequel les composants système reliés peuvent échanger des données par l'intermédiaire d'une interface système,
pour lequel les composants système sont intégrés à demeure dans l'ordinateur central (1),
pour lequel les liaisons souhaitées sont définies à l'aide d'un environnement de développement et sont ensuite transférées dans l'ordinateur central,
et pour lequel des informations sur la liaison des composants système sont analysées par le système de gestion (4) en vue de la configuration du dispositif de mesure, et pour lequel les liaisons correspondantes sont établies.

15. Procédé d'exploitation selon la revendication 14, pour lequel les composants système sont des composants d'entrée (I), des composants de sortie (O), des composants de fonction (F), des composants de service (D), des composants de gestion (V) ou des composants d'interface (IX)

16. Procédé d'exploitation selon la revendication 14 ou 15, **caractérisé en ce que** les composants système sont, de préférence à l'aide d'un environnement de développement, spécifiés et/ou sélectionnés et/ou configurés et/ou reliés les uns aux autres avant qu'ils ne soient transférés dans l'ordinateur central (1).

17. Procédé d'exploitation selon l'une des revendications 14 à 16, **caractérisé en ce que** les composants système sont, lors du fonctionnement du dispositif de mesure, transférés dans l'ordinateur central (1) et/ou intégrés par le système de gestion (4).

18. Procédé d'exploitation selon la revendication 14, pour lequel les composants d'entrée (I) représentent des composants matériels, qui servent pour l'entrée de données, les composants de sortie (O) représentent des composants matériels, qui servent à la sortie de données, les composants d'interface (IX) représentent le matériel d'interface présent dans l'ordinateur central (1) et les composants de fonction (F), les composants de service (D) et les composants de gestion (V) représentent des unités fonctionnelles d'un code de programme exécutable sur l'ordinateur central (1).

19. Procédé d'exploitation selon la revendication 14 à 18, pour lequel l'interface système d'un composant système se compose d'une zone mémoire dans l'ordinateur central (1), à laquelle aussi bien le système de gestion qu'un ou plusieurs autres composants système peuvent accéder.

20. Procédé d'exploitation selon la revendication 14, **caractérisé en ce que** les informations sont transmises d'un premier dispositif de mesure vers d'autres dispositifs de mesure, par l'intermédiaire de la connexion / liaison des composants système.
